# EUROPÄISCHE PATENTSCHRIFT

(11) **EP 0 666 006 B1**
(45) Veröffentlichungstag und Bekanntmachung des Hinweises auf die Patenterteilung: **13.01.1999**
(21) Anmeldenummer: 93922547.0
(22) Anmeldetag: 11.10.1993
(51) Int. Cl.: H04M 1/72, H04Q 7/38, H04B 17/00

(54) **VERFAHREN ZUR BESTIMMUNG EINES FREIEN KANALS BEI FDM-FUNKÜBERTRAGUNGSSYSTEMEN**
METHOD OF DETERMINING AN IDLE CHANNEL IN FDM RADIO TRANSMISSION SYSTEMS
PROCEDE PERMETTANT DE DETERMINER UN CANAL LIBRE DANS DES SYSTEMES DE TRANSMISSION RADIO MRF

(30) Priorität: 21.10.1992 DE 4235453
(43) Veröffentlichungstag der Anmeldung: 09.08.1995
(73) Patentinhaber: GRUNDIG Aktiengesellschaft, 90762 Fürth (DE)
(72) Erfinder: MÜLLER, Werner, D-91154 Roth (DE)
(86) Internationale Anmeldenummer: EP9302784
(87) Internationale Veröffentlichungsnummer: WO9409584

(56) Entgegenhaltungen:
- EP-A- 0 361 465
- WO-A-92/11736
- US-A- 4 166 927
- IEEE/IEICE GLOBAL TELECOMMUNICATIONS CONFERENCE Bd. 3 , 15. November 1987 , TOKYO Seiten 1926 - 1930 HULBERT ET AL 'THE RELATIONSHIP BETWEEN ADJACENT CHANNEL REJECTION AND SPECTRAL EFFICIENCY FOR ADVANCED CORDLESS TELEPHONES'

## Beschreibung

Die Erfindung betrifft ein Verfahren zur Klassifizierung von Empfangssignalen in Frequenzmultiplex-Funkübertragungssystemen nach dem Oberbegriff des Patentanspruchs 1.

Aus der EP-A2-299 515 ist ein Verfahren bekannt, um Basisstation und Mobilteil eines schnurlosen Telefons über einen Funkübertragungskanal miteinander zu verbinden. Bei diesem Verfahren wird die elektrische Feldstärke zunächst auf Prioritätskanälen ermittelt. Wenn die Feldstärke auf einem Prioritätskanal für eine bestimmte Dauer unterhalb eines Schwellwertes liegt, so wird dieser Prioritätskanal als frei erkannt und die Sende- und Empfangs frequenz in Basisstation und Mobil teil auf diesen Prioritätskanal eingestellt.

Von Nachteil bei diesem Verfahren ist, daß das Seitenbandrauschen eines nahen Senders in den Nachbarkanälen eine so große elektrische Feldstärke bewirken kann, daß Funkübertragungskanäle fälschlich als belegt erkannt werden.

Beim Gegenstand der DE-C2-35 08 900 handelt es sich um eine Anordnung zur Gewinnung eines Schaltkriteriums für Funkgeräte aus einer Feldstärkemessung. Diese Anordnung enthält eine Vergleichseinrichtung, die die in einem Übertragungskanal periodisch gemessene elektrische Feldstärke mit einem Schwellwert vergleicht. Liegt die gemessene Feldstärke über dem Schwellwert, wird zu einem Zählerstand in einem Akkumulator eine erste Zahl addiert; liegt die gemessene Feldstärke unter dem Schwellwert, wird von dem Zählerstand im Akkumulator eine zweite Zahl subtrahiert. Unterschreitet der Zählerstand im Akkumulator einen bestimmten Wert, so ist das Schaltkriterium erfüllt und es wird auf einen anderen Ubertragungskanal gewechselt.

Durch diese relativ aufwendige Schaltungsanordnung, wird bei Störungen durch Nachbarkanäle im Vergleich zu Verfahren, bei denen nur die Feldstärke auf dem übertragungskanal gemessen wird, aber keine Verbesserung erzielt.

Die EP-A2-298 750 offenbart ein schnurloses Telefon, bei dem die Feldstärke in einem Kontrollkanal ausgewertet wird, um festzustellen, ob dieser belegt ist. Dazu wird ein Vergleich mit einem Schwellwert durchgeführt. Außerdem wird die Feldstärke auf einem Übertragungskanal dazu benutzt, die Übertragungsqualität zu bestimmen. Sobald die Feldstärke auf dem Übertagungskanal unterhalb eines Schwellwertes liegt, ertönt ein Warnsignal. Der Benutzer hat nun die Möglichkeit, einen niedrigeren Schwellwert einzugeben, so daß die gemessene Feldstärke wieder über dem Schwellwert liegt. Wählt der Benutzer keinen niedrigeren Schwellwert für die Feldstärke, so wird nach einer bestimmten Dauer die Verbindung ausgelöst.

Auch bei dieser Vorgehensweise ist es nicht möglich, Störungen durch Nachbarkanäle zu erkennen. Weiterhin von Nachteil ist, daß nicht zwischen Rauschen und Information auf dem Ubertragungskanal unterschieden werden kann.

Aus der EP-A2-359 231 ist ein schnurloses Telefon bekannt, bei dem festgestellt wird, ob sich das Mobilteil innerhalb oder außerhalb des Funkversorgungsbereiches befinden. Diese Entscheidung wird aufgrund eines Vergleichs der Empfangsfeldstärke mit einem Schwellwert erreicht. Sinkt die Empfangsfeldstärke unter den Schwellwert, wird die Verstärkung des Empfangssignals verringert.

Bei diesem schnurlosen Telefon ist von Nachteil, daß nicht zwischen einem gestörten und ungestörten Ubertragungskanal unterschieden werden kann und somit auch ein ungestörtes Signal mit niedriger Feldstärke nicht mehr ausreichend verstärkt wird. Das Erkennen einer Störung durch einen Nachbarkanal ist ebenfalls nicht möglich.

Aus der EP-A2-283-401 ist eine Schaltungsanordnung bekannt, die eine Interferenz zweier frequenzmodulierter Signale verhindert. Hierbei wird das Empfangssignal durch einen logarithmischen Verstärker verstärkt und anschließend einem Vergleicher zugeleitet, der einen Vergleich der Amplitude mit einem Referenzsignal durchführt. Wird festgestellt, daß das Empfangssignal durch Interferenz mit einem anderen frequenzmodulierten Signal, das im gleichen Übertragungskanal gesendet wird, gestört ist, wird der Übertragungskanal gewechselt.

Von Nachteil bei dieser Schaltungsanordnung ist, daß der Übertragungskanal nicht aufgrund von störendem Rauschen gewechselt wird. Außerdem ist ein großer Schaltungsaufwand für den logarithmischen Verstärker und den Interferenzdetektor erforderlich. Ein weiterer Nachteil besteht darin, daß zunächst ein frequenzmoduliertes Signal ausgesendet wird, um eine Interferenz feststellen zu können, wodurch gegebenenfalls ein bereits von einem anderen Sender im Ubertragungskanal gesendetes Informationssignal gestört wird.

Die europäische Anmeldung EP-A2-244 872 offenbart eine Schaltungsanordnung, mit der überprüft werden kann, ob ein Funkübertragungskanal belegt ist. Es wird dabei ein Testsignal gesendet und gleichzeitig die Feldstärke auf dem Übertragungskanal gemessen. Ist die gemessene Feldstärke größer als die aufgrund des gesendeten Testsignals erwartete Feldstärke, wird eine Interferenz mit einem anderen Signal erkannt und der Übertragungskanal wird gewechselt.

Durch diese Vorgehensweise ist es nicht möglich, einen Übertragungskanal als belegt zu erkennen, ohne einen über diesen Kanal bereits stattfindenden Informationsaustausch zu stören.

Aus der EP-A2-282 087 ist ein schnurloses Telefon bekannt, dessen Basisstation eine Aufforderung an das zugeordnete Mobilteil aussendet, um festzustellen, ob der verwendete Übertragungskanal frei ist. Empfängt die Basisstation vom Mobilteil eine Bestätigung, die über den selben Kanal übertragen wurde, so wird der verwendete Ubertragungskanal als frei erkannt.

Diese Vorgehensweise hat den Nachteil, daß für andere Funkübertragungssysteme auf dem übertragungskanal starke Störungen auftreten. Ein weiterer Nachteil besteht darin, daß der Ubertragungskanal fehlerhafterweise als frei erkannt wird, wenn die Übertragung von Aufforderung und Bestätigung, z.B. in eine Übertragungspause einer anderen Funkübertragungseinrichtung fällt.

Die Aufgabe der vorliegenden Erfindung ist es zu prüfen, ob in einem Übertragungskanal die zur übertragung benötigte Bandbreite frei von Störungen ist. Dabei soll eine über diesen Kanal eventuell stattfindende Kommunikation nicht gestört werden.

Diese Aufgabe wird erfindungsgemäß durch die im Patentanspruch 1 gekennzeichneten Merkmale gelöst.

Die erfindungsgemäße Verfahrensweise ermöglicht eine qualitative Beurteilung von Störungen und anderen Signalen im übertragungskanal in Abhängigkeit von deren Frequenz. Dies wird durch mehrere schmalbandige Messungen der Feldstärke bei unterschiedlichen Frequenzen innerhalb des Übertragungskanals erreicht. Dadurch kann zwischen Störungen unterschieden werden, die nur in einem kleinen Bereich an der oberen und/oder unteren Frequenzgrenze des Übertragungskanals auftreten und solchen, die über den gesamten Frequenzbereich des Übertragungskanals ungefähr konstant sind (Rauschen). Treten Störungen nur an der oberen und/oder unteren Frequenzgrenze des Übertragungskanals auf, wird der übertragungskanal als frei erkannt und für den Aufbau einer Verbindung freigegeben, da diese Frequenzbereiche für eine störungsfreie Übertragung nur von geringer Bedeutung sind.

Das erfindungsgemäße Verfahren nach Patentanspruch 2 weist den Vorteil auf, daß durch die Demodulation des Empfangssignals und die Untersuchung verschiedener spektraler Komponenten des Basisbandsignals eine weitere Unterscheidung der auf dem Übertragungskanal vorhandenen Signale möglich ist. Es kann dadurch zusätzlich zwischen Rauschen, Sprach- und Datenkommunikation unterschieden werden.

Das erfindungsgemäße Verfahren nach Patentanspruch 3 weist den Vorteil auf, daß die obere und untere Frequenzgrenze des Übertragungskanals sowie dessen Mittenfrequenz sich am besten dazu eignen, das vorhandene Signal zu klassifizieren, da die Signale, die an der oberen und unteren Frequenzgrenze auftreten, die Übertragungsgüte des Kanals nur wenig beeinflussen, die Signale um die Mittenfrequenz hingegen sehr stark.

Das erfindungsgemäße Verfahren nach Patentanspruch 4 weist den Vorteil auf, daß sich der Gleichanteil des Basisbandsignals am besten zur Überprüfung des Belegtzustandes des Übertragungskanals eignet, da er bei einem Nutzsignal ein Maß für die Abweichung von der Mittenfrequenz ist und durch einfache schaltungstechnisch Maßnahmen ermittelt werden kann.

Das erfindungsgemäße Verfahren nach Patentanspruch 5 weist den Vorteil auf, daß die Übertragungskanäle sehr schmal sein können oder die Sendeleistung nicht exakt an der Frequenzgrenze des Übertragungskanals bereits auf einen sehr kleinen Wert abgefallen sein muß, und daß auch solche Übertragungskanäle noch als frei erkannt werden, deren beiden Nachbarkanäle bereits belegt sind. Dadurch ist die Verwendung preisgünstigerer Bauteile möglich.

Die Erfindung wird im folgenden näher beschrieben und erläutert. Es zeigen:
- Fig. 1: eine mögliche Belegung der Übertragungskanäle mit Sendesignalen und
- Fig. 2: die gemessene Feldstärkenverteilung in Abhängigkeit von der Frequenz.

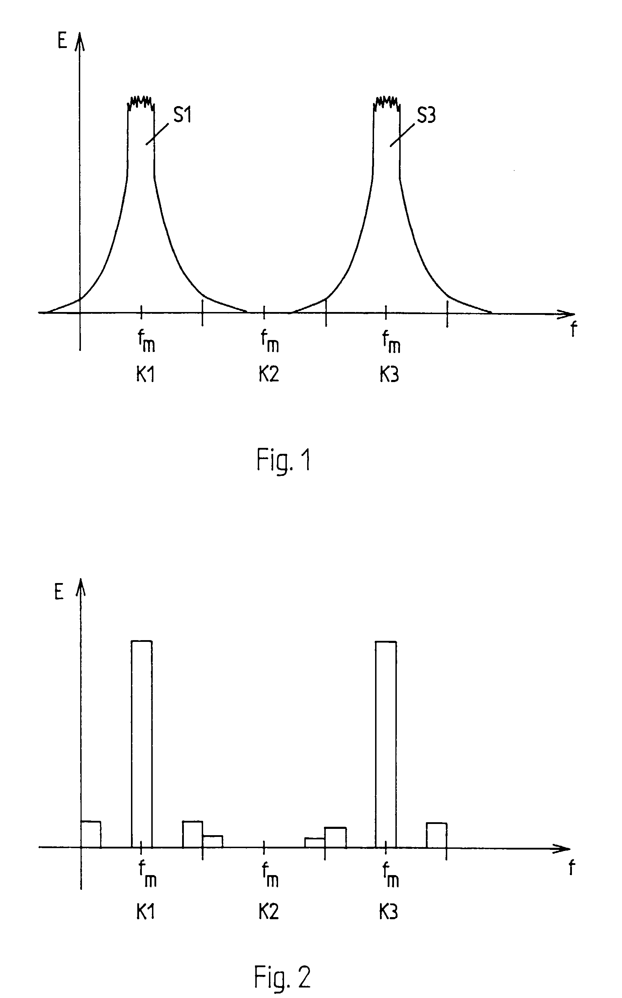

Die Fig. 1 zeigt für mehrere Übertragungskanäle K1 bis K3 die auftretende Feldstärke E. Dabei wird Übertragungskanal K1 durch ein Sendesignal S1 belegt, Übertragungskanal K3 durch ein Sendesignal S3. Im Übertragungskanal K2 erfolgt zunächst keine Funkübertragung, die in diesem Übertragungskanal auftretende Feldstärke E wird im wesentlichen durch das Seitenbandrauschen der Sendesignale S1 und S3 hervorgerufen. Soll ein weiteres Sendesignal S2 übertragen werden, sucht der entsprechende Sender zunächst einen freien Übertragungskanal. Bei dieser Suche werden für jeden zu überprüfenden Übertragungskanal mehrere schmalbandige Messungen der Feldstärke E durchgeführt, bei denen das Frequenzintervall, in dem die Feldstärke gemessen wird, verschiedene Frequenzbereiche erfaßt. Es wird eine Messung an der unteren und eine an der oberen Frequenzgrenze des Übertragungskanals sowie eine Messung bei der Mittenfrequenz fm des Übertragungskanals durchgeführt. Bei einer Bandbreite des Übertragungskanals von z.B. 25 kHz, wie er bei einem schnurlosen Telefon vorliegt, kann die durch die Messung erfaßte Bandbreite ca. 5 kHz betragen.

In Fig. 2 sind die gemessenen Feldstärken über der Frequenz aufgetragen. Der Wert der Feldstärke bestimmt sich dabei aus dem Mittelwert der über der Bandbreite der Messung auftretenden Feldstärke. Da der Übertragungskanal K1 belegt ist, wird bei dessen Mittenfrequenz fm ein großer Feldstärkewert gemessen, die Feldstärkewerte an der oberen und unteren Frequenzgrenze dieses Übertragungskanals sind deutlich kleiner. Aufgrund der absoluten Feldstärkewerte und deren Verteilung über der Frequenz wird der übertragungskanal K1 als belegt erkannt. Im Anschluß daran werden Feldstärkemessungen im Ubertragungskanal K2 durchgeführt. Da dieser nicht belegt ist, ist die bei der Mittenfrequenz fm gemessene Feldstärke wesentlich geringer als beim Übertragungskanal K1. Die Feldstärkewerte, die an der oberen und unteren Frequenzgrenze des Übertragungskanals K2 auftreten, werden durch Nachbarkanalstörungen der Kanäle K1 und K3 verursacht und sind nicht deutlich kleiner als die Feldstärkewerte, die bei der Mittenfrequenz fm von Kanal K2 gemessen werden. Aus den absoluten Feldstärkewerten und der Feldstärkeverteilung über der Frequenz wird Übertragungskanal K2 als nicht belegt erkannt. Der Sender S2 kann somit den Übertragungskanal K2 für eine Ubertragung nutzen.

Außer der Feldstärke des im jeweiligen Übertragungskanal vorliegenden Signals und deren Verteilung im Frequenzintervall des Übertragungskanals kann auch das demodulierte Signal selbst oder spektrale Komponenten des demodulierten Signals ein Entscheidungskriterium liefern, ob der Übertragungskanal belegt ist oder nicht. Liegt lediglich ein Rauschsignal auf dem Übertragungskanal vor, weisen alle spektralen Komponenten ungefähr gleiche Amplituden auf. Insbesondere der Gleichanteil ist konstant.

Wird hingegen ein Sprachsignal übertragen, weist der Gleichanteil des Basisbandsignals bei einer geringen Verstimmung der Trägerfrequenz einen streng monotonen Verlauf auf. An diesem Verlauf des Gleichanteils im Basisbandsignal kann erkannt werden, daß über diesen Übertragungskanal ein Nutzsignal übertragen wird.

Findet eine Datenübertragung auf dem Übertragungskanal statt, so treten auch hier im Basisbandsignal signifikante Amplitudenverteilungen über der Frequenz auf, die erkannt werden können. Bei einer FSK-Modulation (Frequenzy-Shift-Keying, eines der am meisten verwendeten Modulationsverfahren zur Datenübertragung) treten nur zwei verschiedene Frequenzen mit signifikanter Amplitude auf und diese Frequenzen liegen im hörbaren Frequenzbereich. Dadurch ist auch bei einer Datenübertragung oder bei der Verwendung digitaler Endgeräte eine Unterscheidung zwischen Stör- und Nutzsignal möglich.

## Patentansprüche

1. Verfahren zur Signalklassifizierung bei FDM-Funkübertragungssystemen, mit einer Sendersuchlaufeinrichtung, die die zugeordneten Funkübertragungskanäle (K1 bis K3) abtastet, wobei ein Funkübertragungskanal als frei erkannt wird, wenn die gemessene elektrische Feldstärke (E) im Funkübertragungskanal unterhalb eines Schwellwertes liegt,
**dadurch gekennzeichnet,** daß
die elektrische Feldstärke (E) mehrmals schmalbandig bei unterschiedlichen Empfangsfrequenzen, die innerhalb des zu überprüfenden Funkübertragungskanals liegen, gemessen wird und daß aufgrund der absolut gemessenen Feldstärkewerte und/oder durch einen Vergleich der Feldstärkewerte bei unterschiedlichen Empfangsfrequenzen unterschieden wird zwischen breitbandigen Störungen, schmalbandigen Störungen und schmalbandiger Information.

2. Verfahren nach Anspruch 1,
**dadurch gekennzeichnet**, daß
das Empfangssignal demoduliert wird und die Feldstärke bestimmter spektraler Komponenten im Basisbandsignal und/oder die Feldstärkeverteilung über der Frequenz ausgewertet wird, um den Belegtzustand eines Übertragungskanals und, bei Belegung, die über diesen Übertragungskanal übertragene Information zu erkennen.

3. Verfahren nach Anspruch 1 oder 2,
**dadurch gekennzeichnet**, daß
das Empfangssignal bei der Mittenfrequenz des Funkübertragungskanals und an der oberen und unteren Frequenzgrenze des Funkübertragungskanals ausgewertet wird.

4. Verfahren nach Anspruch 2 oder 3,
**dadurch gekennzeichnet,** daß
der Gleichanteil im Basisbandsignal und dessen Veränderung bei einer geringen Verstimmung der Trägerfrequenz als Entscheidungskriterium für den Belegtzustand des Funkübertragungskanals dient.

5. Verfahren nach einem oder mehreren der Ansprüche 1 bis 4, **dadurch gekennzeichnet**, daß
das Verfahren bei einem schnurlosen Telefon oder einem Mobiltelefon eingesetzt wird.

## Claims

1. Method of signal classification in FDM radio transmission systems, having a transmitter search device which scans the associated radio transmission channels (K1 to K3), a radio transmission channel being detected as free if the measured electrical field strength (E) in the radio transmission channel is below a threshold value,
characterized in that the electrical field strength (E) is repeatedly measured in narrow bands at different reception frequencies which are inside the radio transmission channel to be checked, and in that a distinction is made between broad-band interference, narrow-band interference and narrow-band information on the basis of the measured absolute field-strength values and/or by comparing the field-strength values at various reception frequencies.

2. Method according to Claim 1, characterized in that the incoming signal is demodulated and the field strength of certain spectral components in the baseband signal and/or the field-strength distribution over the frequency are/is evaluated in order to detect the seizure state of a transmission channel and, in the event of seizure, to detect the information transmitted via said transmission channel.

3. Method according to Claim 1 or 2, characterized in that the incoming signal is evaluated for the centre frequency of the radio transmission channel and at the upper and lower frequency limits of the radio transmission channel.

4. Method according to Claim 2 or 3, characterized in that the steady component in the baseband signal and its variation during a slight detuning of the carrier frequency serves as decision criterion for the seizure state of the radio transmission channel.

5. Method according to one or more of Claims 1 to 4, characterized in that the method is used in the case of a cordless telephone or a mobile telephone.

## Revendications

1. Procédé de classification de signaux dans des systèmes de transmission radio FDM, comportant un dispositif de recherche d'émetteurs, qui explore les canaux associés de transmission radio (K1 à K3), un canal de transmission radio étant identifié comme libre lorsque l'intensité mesurée (E) du champ électrique dans le canal de transmission radio est inférieure à une valeur de seuil, caractérisé en ce qu'on mesure l'intensité de champ électrique (E) plusieurs fois, selon un mode à bande étroite, pour différentes fréquences de réception, qui sont situées à l'intérieur du canal de transmission radio à contrôler, et que sur la base des valeurs de l'intensité du champ, mesurés de façon absolue, et/ou sur la base d'une comparaison des valeurs d'intensité de champ pour différentes fréquences de réception, on établit une distinction entre des parasitages à bande étroite, des parasitages à large bande et une information à bande étroite.

2. Procédé selon la revendication 1, caractérisé en ce que le signal de réception est démodulé et l'intensité de champ de certaines composantes spectrales dans le signal de bande de base et/ou la distribution d'intensité de champ en fonction de la fréquence est évalué pour identifier l'état d'occupation d'un canal de transmission et, en cas d'occupation, identifier l'information transmise par l'intermédiaire de ce canal de transmission.

3. Procédé selon la revendication 1 ou 2, caractérisé en ce que le signal de réception est évalué pour la fréquence centrale du canal de transmission radio et au niveau des limites supérieure et inférieure de fréquences du canal de transmission radio.

4. Procédé selon la revendication 2 ou 3, caractérisé en ce que la composante continue dans le signal de bande de base et sa modification dans le cas d'un faible désaccord de la fréquence porteuse est utilisée en tant que critère de décision pour l'état d'occupation du canal de transmission radio.

5. Procédé selon une ou plusieurs des revendications 1 à 4, caractérisé en ce que le procédé est utilisé pour un téléphone sans fil ou pour un téléphone mobile.
